# EUROPÄISCHE PATENTSCHRIFT

(11) **EP 0 923 715 B1**
(45) Veröffentlichungstag und Bekanntmachung des Hinweises auf die Patenterteilung: **27.02.2002**
(21) Anmeldenummer: 97929245.5
(22) Anmeldetag: 20.06.1997
(51) Int. Cl.: G01L 1/16, G01L 1/18, G01L 9/00, G01L 19/00, G01C 19/56, G01P 15/08

(54) **VERFAHREN ZUR ANTRIEBSANREGUNG VON SCHWINGERN ZUR KAPAZITIVEN MESSUNG VON KRAFT, BESCHLEUNIGUNG UND/ODER DREHRATEN**
METHOD OF STIMULATING AN OSCILLATOR CONTROL FOR CAPACITIVE MEASUREMENT OF STRENGTH, ACCELERATION AND/OR ROTATION SPEED
PROCEDE D'EXCITATION DE COMMANDE D'OSCILLATEURS POUR MESURER EN REGIME CAPACITIF LA FORCE, L'ACCELERATION ET/OU LA VITESSE DE ROTATION

(30) Priorität: 04.09.1996 DE 19635923
(43) Veröffentlichungstag der Anmeldung: 23.06.1999
(73) Patentinhaber: LITEF GmbH, 79115 Freiburg (DE)
(72) Erfinder: RYRKO, Bruno, D-79211 Denzlingen (DE); SPAHLINGER, Günter, D-70188 Stuttgart (DE); GUTMANN, Walter, D-79244 Münstertal (DE)
(74) Vertreter: Müller, Frithjof E., Dipl.-Ing.
(86) Internationale Anmeldenummer: EP9703257
(87) Internationale Veröffentlichungsnummer: WO9810258

(56) Entgegenhaltungen:
- EP-A- 0 623 824
- DE-A- 4 430 439

## Beschreibung

Die Erfindung betrifft ein Verfahren zur kapazitiven Antriebsanregung von Schwingern für Sensoren zur kapazitiven Messung von physikalischen Größen wie Kraft, Beschleunigung und/oder von Drehraten über die Bestimmung von Corioliskräften, bei dem eine auf die Eigenfrequenz des Schwingers abgestimmte Folge von elektrischen Pulsen einen mit dem Sensor verbundenen Antriebskondensator beaufschlagt.

Ein solches Verfahren ist aus der DE-A-4 430 439 bekannt. Vorzugsweise, jedoch nicht ausschließlich kommen im Rahmen der Erfindung plattenförmige Schwinger zur Anwendung.

Bei der Art der hier in Rede stehenden Sensoren handelt es sich um solche, bei denen frequenzanaloge Anregungsverfahren und drall- bzw. impulserhaltende Meßprinzipien angewendet und bei der Auslesung Drall- bzw. Pulsänderungen erfaßt werden. Als Anwendungsbeispiel ist in erster Linie an Coriolis-Drehratensensoren gedacht.

Die Messung von Drehraten durch die Bestimmung von Corioliskräften ist grundsätzlich bekannt.

Bei den zur Zeit auf dem Markt erhältlichen Coriolis-Drehratensensoren werden zur Anregung von Schwingungen und bei der Auslesung piezoelektrische Effekte genutzt. Eine neuere Konstruktion derartiger Drehratensensoren, auf die auch im folgenden Bezug genommen wird, ist in der Patentanmeldungsveröffentlichung DE-A-195 20 051 beschrieben.

Ein Problem bei allen Sensoren dieser Art besteht darin, daß die in der Regel elekrostatische Anregung in den Auslesekanal einkoppelt. Durch Toleranzen in den Flächen der schwingenden Strukturen bzw. den Elektrodenschichten, über die nur idealerweise genau orthogonal zur Schwingerfläche wirkenden Attraktionskräfte entstehen, wird ein Teil des Anregungssignals in den Auslesekanal eingekoppelt. Da beide Signale, also das Auslesesignal und ein durch die genannten Ungenauigkeiten unvermeidliches Störsignal, mit der gleichen Frequenz auftreten, muß dieser Fehler kompensiert werden. Diese Kompensation weist aber in der Regel auch noch Temperaturabhängigkeiten auf. Erschwerend kommt hinzu, daß die Amplituden der kapazitiv auszulesenden im Sub-Mikrovoltbereich liegenden Signale um mehrere Größenordnungen unter denen der anregenden Signale liegen, woraus Stabilitätsprobleme für ein Nullpunktsignal resultieren. Für die Trennung der Antriebsimpulse von diesen äußerst schwachen Auslesesignalen werden hohe Trenndämpfungen verlangt. Dabei reicht die Trennung durch Abschirmung, konstruktive Symmetrie und elektronische Maßnahmen, wie getrennte Erdschleifen für Antrieb und Auslesung, Gleichtaktunterdrückung in der Signalverstärkung, usw. für genauere Sensoren nicht aus.

Es sind Anordnungen solcher Sensoren vorgeschlagen worden, die mikromechanisch vorzugsweise aus Silicium hergestellte Sensorelemente verwenden, für die in der Regel kapazitive Abgriffe vorgesehen werden (vgl. die bereits erwähnte DE-A-195 20 051). Für den Antrieb wird meist ein elektrostatischer Aktuator vorgesehen. Auch für diese bekannten Anordnungen stellt das Übersprechen der Anregung in die Ausleseelektronik ein Problem dar.

Als Ausweg wurde in der Literatur bereits ein elektromagnetischer Antrieb vorgeschlagen, für den allerdings ein unerwünscht hoher Strombedarf erforderlich ist, was die Verlustleistung der Gesamtanordnung stark erhöht. Andere bekannte Lösungen benutzen für die Auslesung Trägerfrequenzverfahren, für die ein erheblicher elektronischer Mehraufwand erforderlich ist.

Im folgenden wird die Problematik bekannter elektrostatischer Antriebsverfahren anhand der Fig. 4 dargestellt, wobei gleichzeitig auf Fig. 4 der wiederholt erwähnten DE-Patentanmeldung DE-A-195 20 051 Bezug genommen wird.

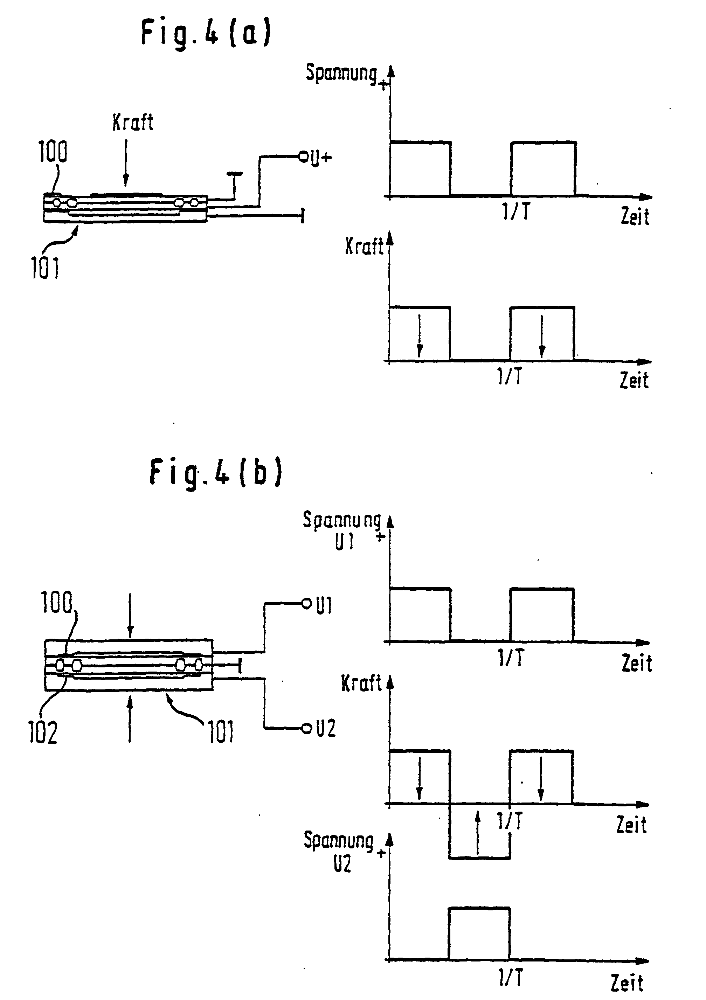

Für die einseitige Anregung eines plattenförmigen Schwingers 101 (unsymmetrische Anordnung, Fig. 4(a)) mit einer im dargestellten Beispiel oberseitigen Elektrode 100 bzw. für die beidseitige Anregung über zwei Elektroden 100 bzw. 102 (symmetrische Anordnung, Fig. 4(b); vergleiche auch Fig. 4 der genannten älteren DE-Patentanmeldung) ist der auf die Eigenfrequenz des Schwingers 101 abgestimmte zeitliche Verlauf der Anregungsspannungen und der daraus resultierenden Kräfte oder Kraftpulse durch Diagramme, jeweils rechts in den Fig. 4(a) und 4(b) dargestellt. Durch Pfeile in dem jeweiligen Kraft-Zeit-Diagramm ist angedeutet, daß - bedingt durch den bekannten quadratischen Zusammenhang zwischen der Antriebsspannung und den resultierenden Kräften - zwischen der/den nur schematisch angedeuteten Elektrode(n) 101 bzw. 100, 102 und dem Schwinger nur Attraktionskräfte möglich sind. Im Fall der Figur 4(a), also bei einseitiger Anregung kann deshalb nur eine Halbwelle der Erregerspannung für den Antrieb genutzt werden. Für die beidseitige Anregung ist der zeitliche Verlauf der Erregerspannungen und der resultierenden Kräfte in den zeitbezogenen Diagrammen der Fig. 4(b) veranschaulicht. Der Schwinger 101 wird durch die zeitliche Aufeinanderfolge der Attraktionskräfte beider Elektroden 100 bzw. 102, die paarweise vorhanden sind, erregt.

In beiden Fällen müssen für die gepulste Anregung des Schwingers 101 relativ hohe Spannungen verwendet werden, von denen Anteile auf elektrostatischem oder auf galvanischem Wege unvermeidlich in den Auslesekanal einkoppeln.

Bei der Messung von Drehraten im Genauigkeitsbereich von einigen Grad pro Sekunde und darunter, sind - wie erwähnt - die Auslesesignale um mehrere Größenordnungen kleiner als die Signale (Spannungspulse) für die Schwingeranregung. Zwar können die Einkopplungen in das Auslesesignal durch sorgfältige Leitungsführung klein gehalten werden. Jedoch ist die geforderte Signaltrennung in der Größenordnung von 100 dB und mehr mit erheblichem Aufwand verbunden.

Der Erfindung liegt damit die Aufgabe zugrunde, ein Verfahren zur kapazitiven Antriebsanregung von vorzugsweise plattenförmigen Schwingern von Sensoren, insbesondere zur Messung von Drehraten anzugeben, durch das sich die erwähnten Probleme der Einkopplung der Anregungssignale in den Auslesekanal zuverlässig vermeiden lassen.

Das erfindungsgemäße Verfahren zur kapazitiven Antriebsanregung von Schwingern, vorzugsweise in plattenförmiger Ausführungsform, von Sensoren zur kapazitiven Messung von physikalischen Größen wie Kraft, Beschleunigung und/oder Drehraten über die Bestimmung von Corioliskräften, bei dem eine auf die Eigen) frequenz des Schwingers abgestimmte Folge von elektrischen Pulsen einen mit dem Schwinger verkoppelten Antriebskondensator beaufschlagt, ist erfindungsgemäß dadurch gekennzeichnet, daß zur Antriebsanregung hochfrequente Pulspakete einer amplitudenkonstanten Spannung benutzt werden.

Die angelegte Wechselspannung der Pulspakete hat eine wesentlich höhere Frequenz als die Eigenfrequenz des oder der Schwinger und sie ist vorzugsweise frei von Gleichspannungsanteilen und/oder Spannungskomponenten niederer Frequenzen.

Durch Zuschalten bzw. Wegschalten einer oder mehrerer Perioden der Rechteckspannung bei den einzelnen HF-Pulspaketen kann die Pulsweite bzw. Pulsbreite der jeweiligen Pulspakete oder die Pulsphase über Prozessoren zur Regelung der Schwingeranregung verändert werden.

Gemäß einer Variante beinhaltet die Erfindung ein Verfahren zur kapazitiven Antriebsanregung von Schwingern und Sensoren zur kapazitiven Messung von physikalischen Größen wie Kraft, Beschleunigung und/oder Drehraten über die Bestimmung von Corioliskräften, bei dem eine auf die Eigenfrequenz des Schwingers abgestimmte Folge von gegenphasigen, elektrischen Pulspaaren eine zur Schwingungsachse paarweise symmetrisch vorhandene Anordnung von mindestens zwei Anregungselektroden beaufschlagt und das dadurch gekennzeichnet ist, daß an die zu einem Paar gehörenden beiden Anregungselektroden jeweils eine gleiche amplitudenkonstante HF-Spannung angelegt wird, deren Frequenz wesentlich höher gewählt ist als die Eigenfrequenz des Schwingers, und daß zur Anregung einer bestimmten resultierenden Attraktionskraft auf den Schwinger die gegenphasigen Pulspaare als HF-Pulspakete durch geregeltes Verschieben der Phase der die eine Anregungselektrode beaufschlagenden HF-Spannung gegenüber der die andere Anregungselektrode des Anregungselektrodenpaars beaufschlagenden HF-Spannung erzeugt werden.

Diese weitere Möglichkleit für eine Lösung der gestellten Aufgabe sieht also vor, an die beiden Elektroden des Schwingerelektrodenpaars die gleiche Wechselspannung anzulegen. Diese die Erregerelektroden beaufschlagenden Spannungen gleicher Frequenz werden dann in ihrer Phase gegeneinander verschoben. Sind die Anregungsspannung gleichphasig, so entsteht keine schwingungsanregende Kraftkomponente. Bei unterschiedlicher Phasenlage ergibt sich eine resultierende elektrische Attraktionskraft.

Diese Ausführungsvariante der Erfindung hat den Vorteil, daß die Lastverhältnisse der Versorgung der Schwingungsanregung konstant sind; dies insbesondere dann, wenn die Phasenlagen der Erregersignale gegensymmetrisch verschoben werden. Als weiterer Vorteil ergibt sich eine vergleichsweise gute Trennung von Signalfrequenz und Störungen durch den elektrischen Antrieb. Die Versorgung wird mit hoher Erregerfrequenz belastet; hochfrequente Störungen werden gut gefiltert.

Gemäß einer vorteilhaften Abwandlung der Erfindung kann die Phasenverschiebung in diskreten Schritten erfolgen oder auch kontinuierlich.

Die Erfindung und vorteilhafte Einzelheiten werden nachfolgend unter Bezug auf die Zeichnungen in beispielsweisen Ausführungsformen erläutert.
- **Fig. 1**: zeigt eine der bereits erläuterten Figur 4 entsprechende Darstellung zur einseitigen bzw. beidseitigen Anregung eines Schwingers durch phasen- oder pulsbreitengeregelte gleichspannungsfreie HF-Pulspakete;
- **Fig. 2**: dient zur Erläuterung, wie die Anregung eines Schwingers aufgrund der Erfindung verändert werden kann;
- **Fig. 3**: vermittelt Anhaltspunkte dafür, wie die Frequenz der HF-Erregerpulspakete in Relation zur Schwingereigenfrequenz gewählt werden sollte;
- **Fig. 4**: verdeutlicht eine bereits erläuterte prinzipielle Gestaltung der elektrostatischen Anordnung linearer Schwinger;
- **Fig. 5**: zeigt eine beispielsweise Ausführungsform für eine flächenmäßige Verteilung und Anordnung von Elektroden für einen ein- oder zweiseitig anregbaren Schwinger eines mikromechanischen Drehratensensors mit Geschwindigkeitsregelung bzw. Drehratenrückstellung, wie er in der Druckschrift DE-A-195 20 051 beschrieben ist;
- **Fig. 6**: verdeutlicht eine Brückenschaltung zur Auslesung eines Sensorsignals über das sich eine Antriebskorrektur bzw. das Drehratensignal gewinnen läßt;
- **Fig. 7**: zeigt eine Modelldarstellung eines mikromechanischen, auf dem Coriolisprinzip beruhenden Drehratensensors, für den sich die erfindungsgemäße Antriebstechnik gut eignet;
- **Fig. 8**: verdeutlicht mit den Teilfiguren 8(a) bzw. 8(b) das Prinzip einer abgewandelten kapazitiven Antriebsanregung von Schwingern mit paarweise vorhandenen symmetrisch zur Schwingungsachse angeordneten Antriebselektroden, wobei eine erste Rechteckspannung U 1 an die eine und eine zweite Rechteckspannung U2 gleicher Frequenz an die andere Elektrode des Antriebselektrodenpaars angelegt wird:
- **Fig. 9**: zeigt eine zeitbezogene Darstellung der aus Fig. 8 dem Leser schon bekannten Darstellung der beiden Erregerspannungen U1 und U2 sowie der auf den Schwinger resultierenden Kraftkomponente, wobei verdeutlicht ist, wie sich die jeweilige Kraftkomponente durch Phasenverschiebung der Spannung U1 und U2 gegeneinander verändert; und
- **Fig. 10**: den prinzipiellen Aufbau einer elektronischen Antriebs- oder Erregerschaltung zur Erzeugung der beiden Erregerspannungen U1 und U2, deren Phasenlage in Abhängigkeit von der Schwingereigenfrequenz geregelt und kontinuierlich verschiebbar ist.

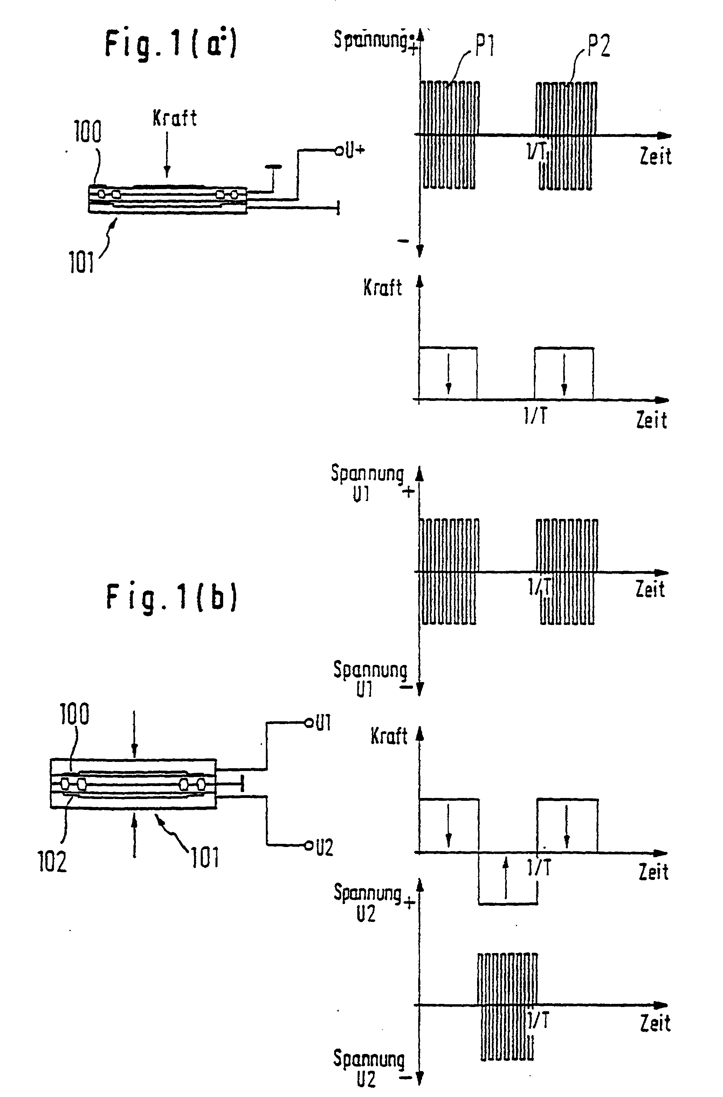

Erfindungsgemäß kann das direkte Einkoppeln des Anregungssignals in das Auslesesignal eines schwingenden Sensors der hier in Rede stehenden Art durch Verwendung eines Hochfrequenzsignals in Form von Pulspaketen vermieden werden. Wie sich aus Fig. 1, deren Darstellung der Fig. 4 entspricht, für die einseitige Anregung eines Schwingers 101 (Fig. 1(a)) bzw. für die zweiseitige Anregung (Fig. 1(b)) ersehen läßt, wird erfindungsgemäß eine hochfrequente Rechteckspannung ohne Gleichspannungsanteile benutzt.

Da die auf den Schwinger 101 ausgeübten Momente bzw. Kräfte von der angelegten Spannung quadratisch abhängig sind, wirken die positiven und negativen Halbwellen der Pulspakete P1, P2, ... ausschließlich in Attraktionsrichtung auf den Schwinger 101, wie die Kraft-Zeit-Diagramme der Teile (a) und (b) der Fig. 1 durch entsprechende Pfeile erkennen lassen.

Wird wie erwähnt, die Amplitude des aus den Pulspaketen P1, P2, ... bestehenden Anregungssignals konstant gehalten, so wirkt ein Attraktions-Momentenpuls um die Schwingerachse bzw. ein Kräftepuls in Schwingungsrichtung.

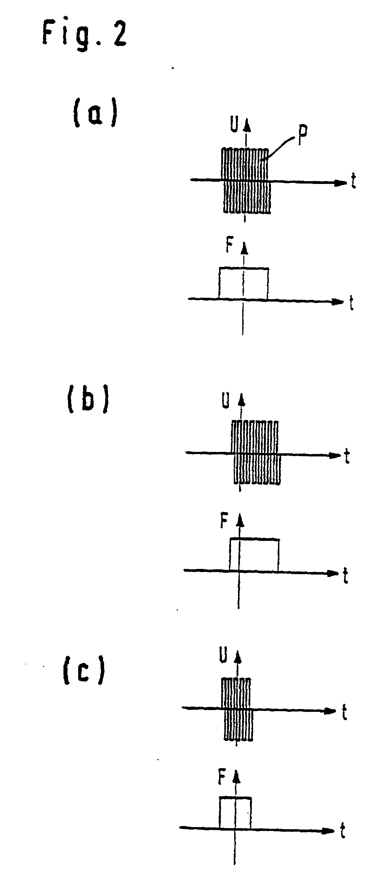

Die Fig. 2 mit Teilfiguren (a) bis (c) veranschaulicht, für den Fachmann unmittelbar einleuchtend, wie die auf den Schwinger 101 wirkende durch ein einzelnes Pulspaket P bewirkte Attraktionskraft sowohl in ihrer Breite als auch in der Phase verschoben werden kann, um eine optimale Resonanzanregung des Schwingers 101 zu erreichen. Die Phase und die Breite des Momenten- bzw. Kräftepulses F läßt sich auf einfache Weise, z.B. digital beeinflußen, um das gesamte Schwingersystem zu regeln.

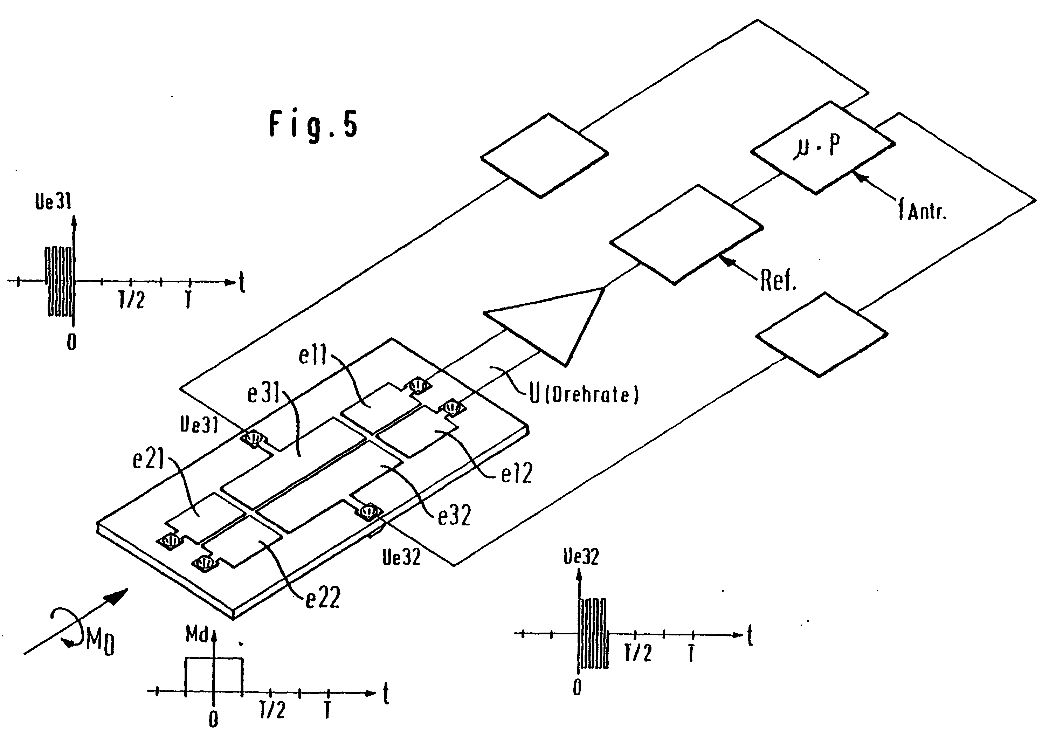

Ersichtlicherweise kann das vom elektrostatischen Antrieb erzeugte Moment M_{D} (Fig. 5) oder die Kraftkomponente leicht über mehr oder weniger Perioden pro Pulspaket linear verändert werden.

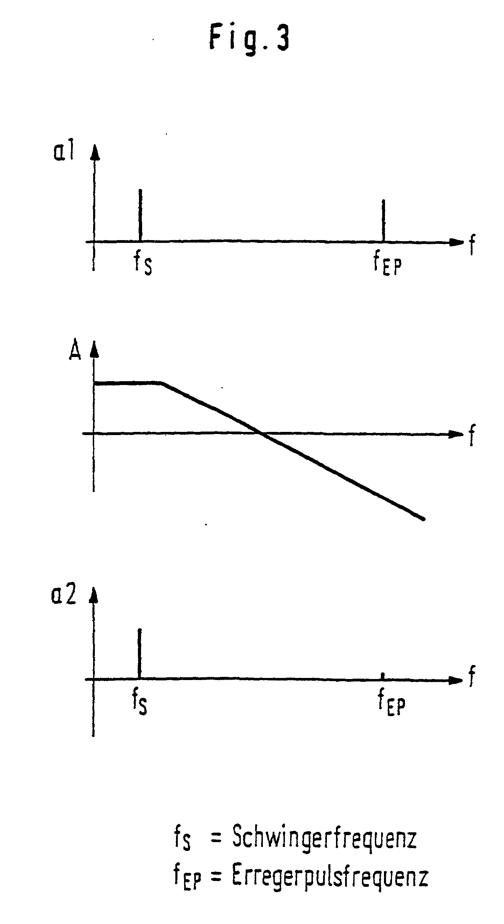

Wie die Fig. 3 zeigt, lassen sich in den Sensorausgang übergekoppelte Anteile der HF-Anregung durch einen geeignet gewählten großen Frequenzunterschied zwischen der Schwingereigenfrequenz fs und der Hochfrequenz der Erregerpulse f_{EP} mittels Filter heraussieben. In Fig. 3 ist ein Ausführungsbeispiel für eine zweiseitige Anregung eines Plattenschwingers veranschaulicht. Die mittlere Kurve zeigt den prinzipiellen Kurvenverlauf eines herausgefilterten Auslesesignals A.

Durch Aufteilung der Anregungselektroden e₃₁, e₃₂ und der Ausleseelektroden e₁₁, e₁₂, wie sie in Fig. 5 veranschaulicht ist, und entsprechend einem von einer Rückstellelektronik µP erzeugten Signal, ist es ferner möglich, Momente M_{D} in der Ausleseachse (orthogonale Schwingerachse) zum Zweck der Rückstellung des Meßausschlags zu erzeugen (Closed Loop-Prinzip).

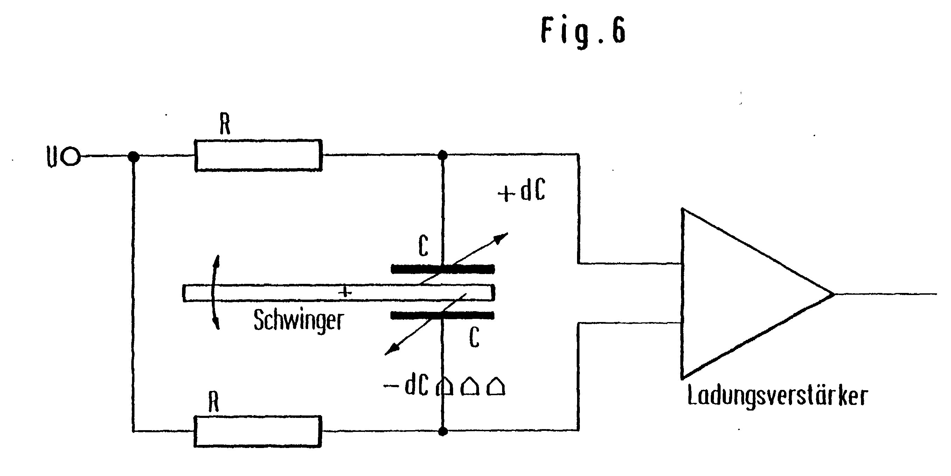

Die Ausgangsgröße eines Coriolis-Drehratensensors mit Rückstellung ist proportional zur Schwingergeschwindigkeit. Für die Konstanz des Sensorskalenfaktors ist die Schwingergeschwindigkeit konstant zu halten. Zur Regelung der Schwingergeschwindigkeit kann die Kapazitätsänderung der Antriebskapazität oder einer Elektrode bzw. eines Elektrodenpaars herangezogen werden, wofür Fig. 6 ein Beispiel zeigt. Dabei wird für die direkte Auslesung des Sensorsignals die Ladungsverschiebung ± dC aufgrund der Änderung eines oder im dargestellten Beispiel zweier (mehrerer) Kondensatoren benutzt, wobei als Kapazitäten sowohl die Antriebselektroden e₃₁, e₃₂ als auch zusätzliche Elektroden e₁₁, e₁₂ (vergleiche Fig. 5) benutzt werden können. Die Halb- bzw. Vollbrücke wird dabei mit einer konstanten Gleichspannung U beaufschlagt.

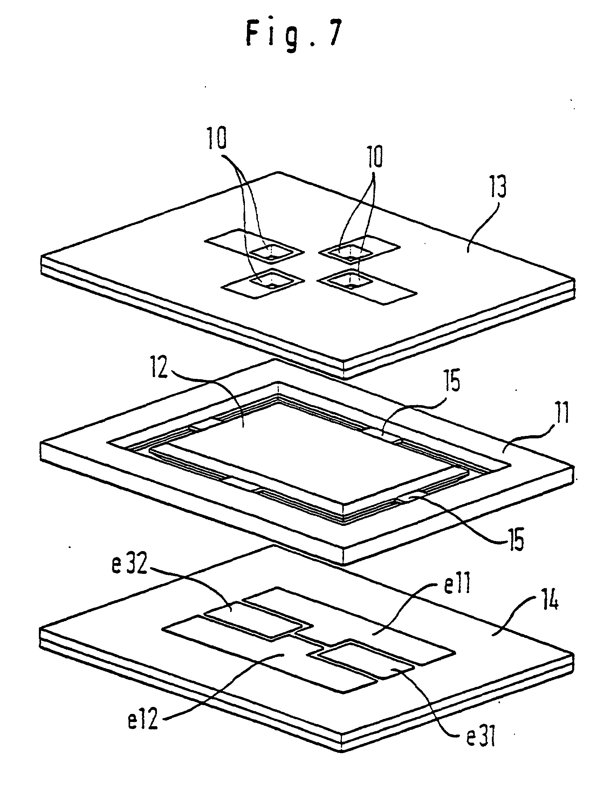

Die Fig. 7 zeigt ein Ausführungsbeispiel eines mikromechanischen Drehratensensors, für den sich das erfindungsgemäße Anregungs- und Ausleseverfahren gut eignet. Dieser Sensor besteht im Prinzip aus drei Waferschichten, nämlich einer oberen Deckplatte 13, einer unteren Deckplatte 14 und einem dazwischen angeordneten Rahmen 11, innerhalb dessen über Stege 15 der plattenförmige Schwinger 12 gehalten ist, bei dem aus Gründen der übersichtlichen Darstellung Elektrodenbeläge weggelassen sind. Die obere bzw. untere Deckplatte 13 bzw. 14sind spiegelsymmetrisch zueinander angeordnet. Die Flächenverteilung der über Durchführungen 10 kontaktierbaren Anregungselektroden e₃₁, e₃₂ bzw. Auslese- oder Abgriffelektroden e₁₁, e₁₂ ist auf der Innenfläche der unteren Deckplatte 14 dargestellt.

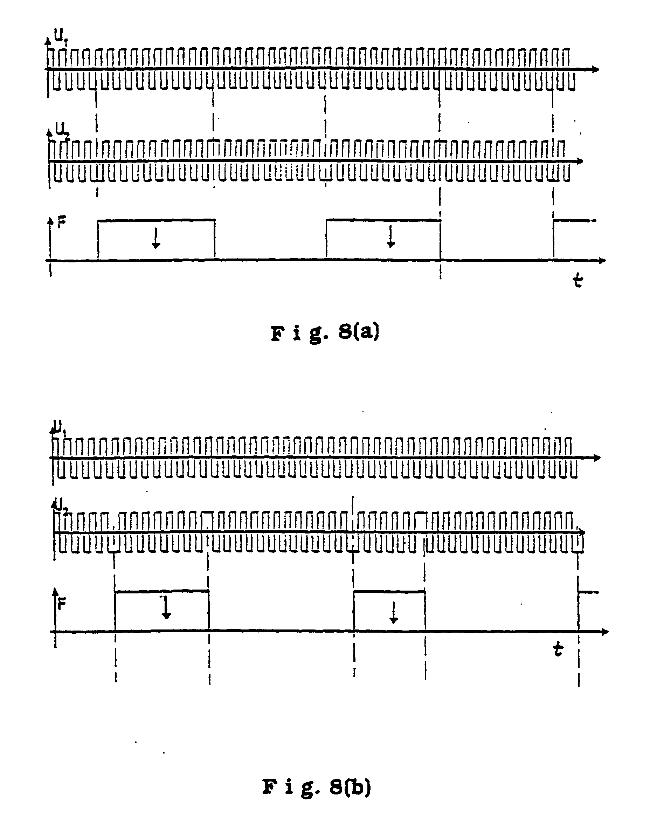

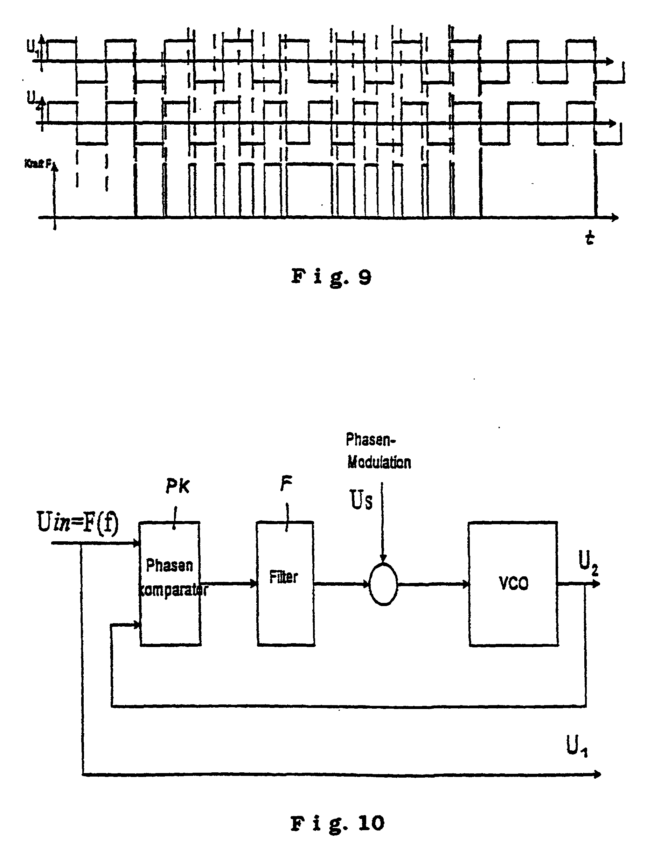

Die Teilfiguren (a) bzw. (b) der Fig. 8 zeigen eine andere vorteilhafte Ausführungsvariante, wobei die Anregung jeweils mit amplitudengleichen Anregungsspannungen auf beiden Elektroden eines Anregungselektrodenpaars, insbesondere mit Rechteckspannungen erfolgt. Sofern die Anregungsspannungen U1 und U2 gleichphasig sind, entsteht am Schwinger keine Kraftkomponente, d.h. dieser Fall entspricht der Kraft 0. Verlaufen die Spannungen U1 und U2 dagegen genau gegenphasig, so entspricht dies einer maximalen Kraftamplitude. Durch Verschieben eines Phasensprungs, beispielsweise bei der Spannung U2, durch gegensymmetrisches Verschieben beider Spannungen oder durch zusätzliche Phasensprünge läßt sich die Kraft in diskreten Amplituden- und Phasenwerten einstellen bzw. regeln, wie sich gut aus der zeitgedehnten Darstellung der Fig. 9 ersehen läßt, die verdeutlicht, wie sich die auf den Schwinger wirkende Antriebs-kraft verändern läßt.

Die Fig. 10 verdeutlicht den prinzipiellen Aufbau einer Schaltung mit PLL-Regelung für die Phasenlage der beiden Antriebsspannungen U1 und U2.

Mittels der zusätzlichen PLL-Schaltung läßt sich die Phasenlage der beiden Antriebsspannungen U₁ und U₂ (vergleiche Fig. 9) kontinuierlich verstellen. Eine höherfrequente Spannung Uᵢₙ beaufschlagt einen Eingang eines Phasenkomparators PK. Durch Summation einer Phasenmodulationsspannung Uₚ zur über ein Filter F gewonnenen Steuerspannung Uₛ eines spannungsgesteuerten Oszillators VCO wird die Phase des Ausgangssignals U₂ der PLL-Schaltung zur Spannung Uₛ um ± π verschoben. Die Phasenlage läßt sich also mit der Sensorantriebsfrequenz modulieren. Die resultierende Attraktionskraft ergibt sich zu F = k · (U₁ - U₂)². Diese Attraktionskraft wird durch das Phasenansteuersignal eingestellt bzw. geregelt. Auf diese Weise läßt sich zum Beispiel durch eine entsprechende Phasenmodulationsspannung eine nichtlineare quadratische Kraftanregung linearisieren.

Das erfindungsgmäße Verfahren zur kapazitiven Antriebsanregung hat mindestens eine der folgenden Eigenschaften und bietet die folgenden Vorteile:
1. Für die Anregung der Erregerschwingungen wird die elektrostatische Attraktionskraft zwischen zwei unterschiedlich geladenen Flächen benutzt. Die zur Schwingungsanregung verwendete Wechselspannung wird mit wesentlich höherer Frequenz gewählt als die Eigenfrequenz des Schwingers und sie ist frei von Gleichspannungsanteilen bzw. niederen Frequenzkomponenten. Vorzugsweise wird eine Rechteckspannung mit konstanter Amplitude benutzt. Durch Zuschalten bzw. Wegschalten einer oder mehrerer Perioden der Rechteckspannung kann die Pulsweite oder Pulsphase über Prozessoren im Sinne einer Regelung der Schwingeranregung verändert werden.
2. Werden zwei amplituden- und frequenzmäßig gleiche Rechteck-Erregerspannungen verwendet, die die Elektroden eines symmetrisch angeordneten Antriebselektrodenpaars beaufschlagen, so läßt sich die Schwingungsanregung durch gegenseitige Verschiebung der Phasenlage der beiden Antriebsspannungen verändern mit dem Vorteil einer geringen Störfrequenzbelastung der Anregungsversorgung durch die Auslesefrequenz.
3. Eine rückstellende Meßanordnung läßt sich verwirklichen, wenn das Antriebssignal entsprechend dem Drehratensignal aufgespalten wird und - wie anhand der Fig. 5 veranschaulicht - auf entsprechend aufgeteilte Elektroden aufgeschaltet wird oder indem parallel zum Antriebssignal von diesem abgeleitetes und entsprechend einem Signalabgriff aufgespaltetes Zusatzsignal auf ein zusätzliches Elektrodenpaar e₂₁, e₂₂ (Fig. 5) geschaltet wird. Die Anordnung der Elektroden ist im ersten Fall so gewählt, daß sie außer zum Antrieb um die Antriebsachse bzw. Antriebsrichtung auch zur Rückstellung des Sensorsignals in der Ausleseachse geeignet ist. Im zweiten Fall ist das gesonderte Elektrodenpaar lediglich für die Rückstellung vorgesehen. Beim Rückstellsignal Null ist die Aufteilung also 1:1.

Durch Kompensation der durch Drehraten erzeugten Schwingerbewegungen sind somit rückgestellte Systeme realisierbar. Ein konstanter Nullpunktfehler läßt sich auf diese Art ebenfalls vergleichsweise einfach kompensieren.

Bei den vorstehenden Erläuterungen wurde von der Verwendung von Spannungszeitinkrementen zur Anregung bzw. Regelung und Rückstellung oder von der Anwendung zweier in ihrer jeweiligen Phasenlage gegeneinander verschiebbaren Erregerspannung ausgegangen. Es sind jedoch auch signalverarbeitungstechnische Lösungen denkbar, bei denen Stromzeitinkremente bzw. gegeneinander phasenverschiebbare Erregerwechselströme benutzt werden, deren Frequenz deutlich über der Eigenfrequenz des zu erregenden Schwingers liegt.

## Patentansprüche

1. Verfahren zur kapazitiven Antriebsanregung von Schwingern für Sensoren zur kapazitiven Messung von physikalischen Größen wie Kraft, Beschleunigung und/oder Drehraten über die Bestimmung von Corioliskräften, bei dem eine auf die Eigenfrequenz des Schwingers (101) abgestimmte Folge von elektrischen Pulsen einen mit dem Schwinger verbundenen Antriebskondensator beaufschlagt, **dadurch gekennzeichnet, daß** zur Antriebsanregung hochfrequente HF-Pulspakete (P1, P2 ...) einer amplitudenkonstanten Spannung benutzt werden.

2. Verfahren nach Anspruch 1, **dadurch gekennzeichnet, daß** für die Antriebsanregung durch HF-Pulspakete eine gleichspannungsfreie Rechteckspannung verwendet wird.

3. Verfahren nach Anspruch 1 oder 2, **dadurch gekennzeichnet, daß** von der Antriebsspannung auf den plattenförmig gestalteten Sensor ausgeübte Kraftpulse durch Änderung der Breite der Rechteckspannungspulse pro Pulspaket geregelt werden.

4. Verfahren nach einem der vorstehenden Ansprüche bei zur Schwingungsachse paarweise symmetrisch vorhandener Anordnung von mindestens zwei Anregungselektroden (e31, e32), **dadurch gekennzeichnet, daß** zur Änderung des auf den Sensor wirkenden Antriebsmoments die Breite und/oder die Phase der Spannungspulse der Pulspakete verändert wird.

5. Verfahren nach einem der vorstehenden Ansprüche, **dadurch gekennzeichnet, daß** die Frequenz der Pulspakete wesentlich höher gewählt ist als die Eigenfrequenz des Schwingers.

6. Verfahren zur kapazitiven Antriebsanregung von Schwingern in Sensoren zur kapazitiven Messung von physikalischen Größen wie Kraft, Beschleunigung und/oder Drehraten über die Bestimmung von Corioliskräften, bei dem eine auf die Eigenfrequenz des Schwingers (101) abgestimmte Folge von gegenphasigen elektrischen Pulspaaren eine zur Schwingungsachse paarweise symmetrisch vorhandene Anordnung von mindestens zwei Anregungselektroden beaufschlagt, **dadurch gekennzeichnet, daß** an die zu einem Paar gehörenden beiden Anregungselektroden (e31, e32) jeweils eine gleiche amplitudenkonstante HF-Spannung angelegt wird, deren Frequenz wesentlich höher gewählt ist als die Eigenfrequenz des Schwingers, und daß zum Erzeugen einer bestimmten resultierenden Attraktionskraft (F) auf den Schwinger die gegenphasigen Pulspaare als HF-Pulspakete durch geregeltes Verschieben der Phase der die eine Anregungselektrode beaufschlagenden HF-Spannung gegenüber der die andere Anregungselektrode des Anregungselektrodenpaars beaufschlagenden HF-Spannung erzeugt werden.

## Claims

1. Method for the capacitive drive excitation of oscillators for sensors for the capacitive measurement of physical quantities such as force, acceleration and/or rotation rates by the determination of Coriolis forces, in which a sequence of electrical pulses, tuned to the natural frequency of the oscillator (101), is applied to a drive capacitor connected to the oscillator, **characterized in that** high-frequency (HF) pulse packets (P1, P2 ...) with a constant-amplitude voltage are used for the drive excitation.

2. Method according to Claim 1, **characterized in that** a square-wave voltage with no DC component is employed for the drive excitation using HF pulse packets.

3. Method according to Claim 1 or 2, **characterized in that** the force pulses exerted on the plate-like sensor by the drive voltage are adjusted by varying the width of the square-wave voltage pulses for each pulse packet.

4. Method according to one of the preceding claims, in the case of an arrangement of at least two excitation electrodes (e31, e32) which is pairwise symmetrical with respect to the oscillation axis, **characterized in that** the width and/or the phase of the voltage pulses of the pulse packets are varied in order to vary the drive moment acting on the sensor.

5. Method according to one of the preceding claims, **characterized in that** the frequency of the pulse packets is chosen to be substantially higher than the natural frequency of the oscillator.

6. Method for the capacitive drive excitation of oscillators in sensors for the capacitive measurement of physical quantities such as force, acceleration and/or rotation rates by the determination of Coriolis forces, in which a sequence of electrical pulse pairs in antiphase which is tuned to the natural frequency of the oscillator (101) is applied to an arrangement of at least two excitation electrodes which is pairwise symmetrical with respect to the oscillation axis, **characterized in that** the two excitation electrodes (e31, e32) belonging to a pair each have the same constant-amplitude HF voltage applied to them, the frequency of which is chosen to be substantially higher than the natural frequency of the oscillator, and **in that**, in order to produce a particular resulting force of attraction (F) on the oscillator, the pulse pairs in antiphase are produced as HF pulse packets by controlled shifting of the phase of the HF voltage applied to one of the excitation electrodes with respect to the HF voltage applied to the other excitation electrode of the excitation electrode pair.

## Revendications

1. Procédé d'excitation de commande capacitive d'oscillateurs pour des capteurs en vue de la mesure capacitive de grandeurs physiques telles que la force, l'accélération et/ou les degrés de rotation par le calcul de forces de Coriolis, procédé dans lequel un train d'impulsions électriques adapté à la fréquence intrinsèque de l'oscillateur (101) sollicite un condensateur de commande connecté à l'oscillateur, **caractérisé en ce qu'**on utilise, pour l'excitation de commande, des paquets d'impulsions à haute fréquence (HF) (P1, P2 ...) d'une tension à amplitude constante.

2. Procédé selon la revendication 1, **caractérisé en ce qu'**on emploie, pour l'excitation de commande par des paquets d'impulsions HF, une tension rectangulaire exempte de tension continue.

3. Procédé selon la revendication 1 ou 2, **caractérisé en ce que** des impulsions de force exercées par la tension de commande sur le capteur conçu en forme de plaque sont régulées en modifiant la largeur des impulsions de tension rectangulaire par paquets d'impulsions.

4. Procédé selon une des revendications précédentes, pour un agencement d'au moins deux électrodes d'excitation (e31, e32) disposé symétriquement par paires par rapport à l'axe d'oscillation, **caractérisé en ce que**, pour modifier le moment de commande agissant sur le capteur, la largeur et/ou la phase des impulsions de tension des paquets d'impulsions est modifiée.

5. Procédé selon une des revendications précédentes, **caractérisé en ce que** la fréquence choisie pour les paquets d'impulsions est nettement supérieure à la fréquence intrinsèque de l'oscillateur.

6. Procédé d'excitation de commande capacitive d'oscillateurs pour des capteurs en vue de la mesure capacitive de grandeurs physiques telles que la force, l'accélération et/ou les degrés de rotation par le calcul de forces de Coriolis, procédé dans lequel un train de paires d'impulsions électriques en opposition de phase adapté à la fréquence intrinsèque de l'oscillateur (101) sollicite un agencement d'au moins deux électrodes d'excitation disposé symétriquement par paires par rapport à l'axe d'oscillation, **caractérisé en ce qu'**à chacune des deux électrodes d'excitation (e31, e32) appartenant à une paire est appliquée une même tension HF d'amplitude constante dont la fréquence choisie est nettement supérieure à la fréquence intrinsèque de l'oscillateur, et **en ce que**, pour produire une force d'attraction résultante déterminée (F) sur l'oscillateur, les paires d'impulsions en opposition de phase sont produites sous la forme de paquets d'impulsions HF par décalage régulé de la phase de la tension HF sollicitant une électrode d'excitation par rapport à la tension HF sollicitant l'autre électrode d'excitation de la paire d'électrodes d'excitation.
